# EUROPÄISCHE PATENTANMELDUNG

(11) **EP 1 158 198 A1**
(43) Veröffentlichungstag der Anmeldung: **28.11.2001**
(21) Anmeldenummer: 00110846.3
(22) Anmeldetag: 22.05.2000
(51) Int. Cl.: F16D 65/34, B60T 13/74

(54) **Elektromechanische Feststellbremse, insbesondere für ein Kraftfahrzeug**

(71) Anmelder: SIEMENS AKTIENGESELLSCHAFT, 80333 München (DE)
(72) Erfinder: Baier-Welt, Christian, Dr., 97222 Rimpar (DE)

(57) **Zusammenfassung**

Zur Erzielung eines kompakten und aufwandsarmen elektromotorischen Servoantriebs für eine Kfz-Feststellbremse wird die Rotation der Bremsstell-Abtriebswelle (2) eines Bremsstell-Elektromotors (1) über eine Kurven- bzw. Kulissenscheibe (3) mit axialem Führungsprofil in eine Translation eines achsparallel in geringem radialen Abstand zu der Bremsstell-Abtriebswelle (2) rückführenden Bremsstell-Gestänges (4) umgesetzt.

## Beschreibung

Die Erfindung bezieht sich auf eine elektromotorische Feststellbremse, insbesondere für ein Kraftfahrzeug, gemäß Patentanspruch 1.

Elektromotorische Feststellbremsen in Kraftfahrzeugen sollen den mit Muskelkraft betätigten mechanischen Handbremshebel ersetzen. Hierbei muss die elektromotorische Feststellbremse die aufzubauende Bremskraft am Seil in sehr kurzer Zeit mit dem im Bordnetz verfügbaren Strom bei möglichst kompakten Abmessungen aufbauen können. Nach dem Anziehen der Bremse und Abschalten des Motors muss weiterhin durch geeignete Maßnahmen sichergestellt werden, dass sich die Bremse durch eine eventuelle unbeabsichtigte Rückbewegung des Seils nicht von selbst lösen kann.

Gemäß Aufgabe vorliegender Erfindung soll eine durch einen Servomotor betreibbare Feststellbremse, insbesondere eine Halte- bzw. Parkbremse für ein Kraftfahrzeug, geschaffen werden, die sich bei kostengünstiger Herstellung insbesondere durch eine große Kompaktheit auszeichnet.

Die Lösung dieser Aufgabe gelingt durch eine elektromotorische Feststellbremse gemäß Patentanspruch 1; vorteilhafte Ausgestaltungen der Erfindung sind Gegenstand der Unteransprüche.

Die erfindungsgemäße Übertragungsankopplung zwischen der Bremsstell-Abtriebswelle und dem Bremsstell-Gestänge erlaubt bei deren paralleler Anordnung auf baulich engstem Raum die Umsetzung der von dem Elektromotor rotatorisch aufgebrachten Bremskraft in eine translatorische Brems-Zustellkraft des Bremsstell-Gestänges mit gleichzeitig einfacher Integrationsmöglichkeit einer unterschiedlichen Übersetzung zwischen Rotation und Translation durch spezielle axiale Kurvenscheibenbzw. Kulissenführung, insbesondere derart, dass der Bremsstell-Elektromotor trotz über den gesamten Bremsstellweg unterschiedlicher Bremszustellbelastungen und Bremszustellgeschwindigkeiten in seinem günstigsten Arbeitspunkt arbeiten kann und somit hinsichtlich seiner Baugröße und seiner batteriebeanspruchenden Leistung entsprechend einer Minimal-Belastung ausgelegt werden kann. In der Praxis bedeutet dies im wesentlichen, dass zu Beginn des Bremsvorganges zur Überwindung des Lüftspiels und der mechanischen Spiele und Lose eine kleinere Übersetzung und im Bereich der hohen Zuspannkräfte für die eigentlichen Bremsanlage eine größere Übersetzung zwischen der Bremsstell-Abtriebswelle und dem Bremsstell-Gestänge vorgesehen ist.

Die Erfindung sowie weitere vorteilhafte Ausgestaltungen der Erfindung werden im folgenden anhand schematischer Ausführungsbeispiele in der Zeichnung näher erläutert; darin zeigen:
- FIG 1: in perspektivischer Darstellung den antriebsseitigen Aufbau einer erfindungsgemäßen elektromotorischen Feststellbremse,
- FIG 2: in Seitenansicht aus FIG 1 die gegenseitige Stellung von Kurvenscheiben- bzw. Kulissenführung und Axialverstellelement zu Beginn eines Feststellbremsvorganges,
- FIG 3: in Seitenansicht aus FIG 1 die gegenseitige Stellung von Kurvenscheiben- bzw. Kulissenführung und Axialverstellelement zum Ende eines Feststellbremsvorganges,
- FIG 4: die Abwicklung des Höhenprofils bzw. des entsprechenden jeweiligen axialen Hubs der Kurvenscheiben- bzw. Kulissenführung über deren Umdrehungswinkel und die Lagedarstellung des Axialverstellelements bzw. dessen endseitiger Laufrolle gemäß den beiden Stellungen aus FIG 2 bzw. FIG 3.

Ein Bremsstell-Elektromotor 1, insbesondere ein für einen Fensterheber-Stellantrieb in einem Kraftfahrzeug entwickelter Kommutatormotor, treibt in einer Aufnahmehalterung 10 über ein axial nachgeschaltetes Planetengetriebe 7 eine Bremsstell-Abtriebswelle 2 an; konzentrisch zu der Bremsstell-Abtriebswelle 2 ist eine Kurven- bzw. Kulissenscheibe 3 mit einem Verlauf (Hubhöhe H als Funktion des Umdrehungswinkels α) eines axialen Höhenprofils 3.1 derart befestigt, dass ein querriegelartiges Axialverstellelement 5 mit seinem an dem axialen Höhenprofil 3.1, vorzugsweise über eine Laufrolle 8, geführten einen freien Ende entsprechende Translationsbewegungen in Richtung der Bremsstell-Abtriebswelle 2 ausführt. Für die mit der Bremsstell-Abtriebswelle 2 rotierende Kurvenbzw. Kulissenscheibe ist ein maximaler Umdrehungswinkel von ca. 360° vorgesehen.

Das querriegelartige Axialverstellelement 5 ist mit seinem anderen Ende, nach einer Ausgestaltung der Erfindung unter Vermittlung einer Hebelumsetzung 6, an ein parallel zur Achse von Bremsstell-Elektromotor 1, Planetengetriebe 7 und Bremsstell-Abtriebswelle 2 in dichtem radialen Abstand zu einer Seilwaage 9 mit in an sich bekannter Weise angekoppelten Seilzug-Bremsbetätigungen S1, S2 rückführenden Bremsstell-Gestänge 4 angelenkt; dadurch kann die Rotationsbewegung der Bremsstell-Abtriebswelle 2 auf engstem Raum und mit einfach fertigbaren sowie montierbaren Umsetzungs- bzw. Übersetzungsmitteln in eine Translationsbewegung des Bremsstell-Gestänges 4 übertragen werden. Die Hebelumsetzung kann je nach motorischer Antriebsleistung bzw. bremsseitiger Bremsbelastung vorteilhaft auch Hebelübersetzung bzw. Hebeluntersetzung mit entsprechend unterschiedlichen Hebellängen eines antriebsseitigen Hebelarms bzw. eines abtriebsseitigen Hebelarms eines um einen Drehpunkt schwenkbaren Umsetzungshebels ausgebildet sein.

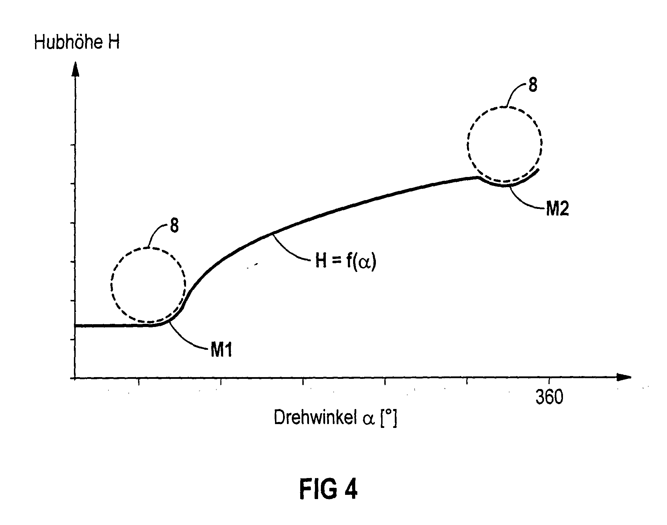

Ein für die Betätigung einer Feststellbremse spezifisches Höhenprofil H = f (α) ist in FIG 4 mit zwei beispielhaftem Positionen zwischen einer linken Lösestellung (α = ca. 40°) und einer rechten Bremsstellung (α = ca. 320°) der das freie Ende des Axialverstellelementes 5 führenden Laufrolle 8 dargestellt; nach einer Ausgestaltung der Erfindung ist in beiden Fällen die Laufrolle 8 und somit das freie Ende des Axialverstellelementes 5 entgegen einer möglichen systembedingten Rückstellkraft in einer Beharrungsposition nach Art einer durch den Antrieb des Bremsstell-Elektromotors 1 bei dessen Aktivierung aufhebbaren Selbsthemmung, dadurch fixierbar, dass eine Mulde M1;M2 in dem Verlauf H = f (α) des axialen Höhenprofils 3.1 der Kurven- bzw. Kulissenscheibe 3 vorgesehen ist, in welche die Laufrolle 8 einsinkt und dadurch fixierbar ist.

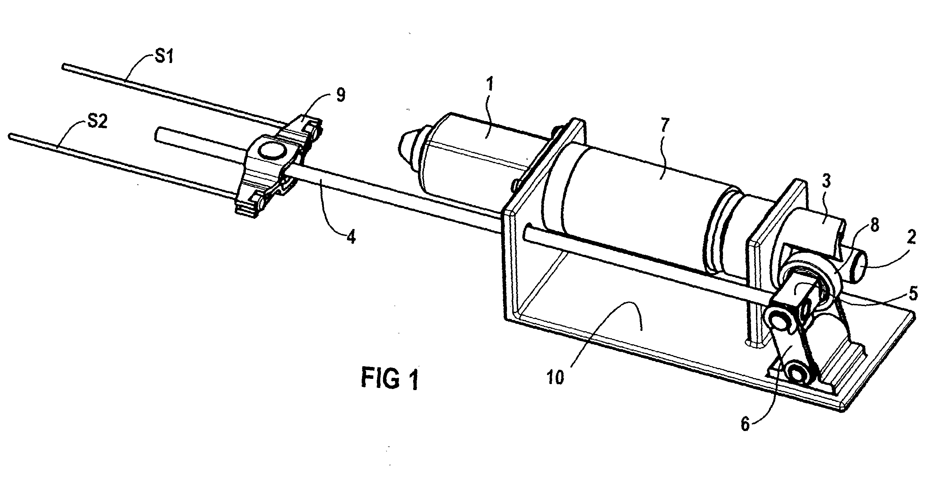

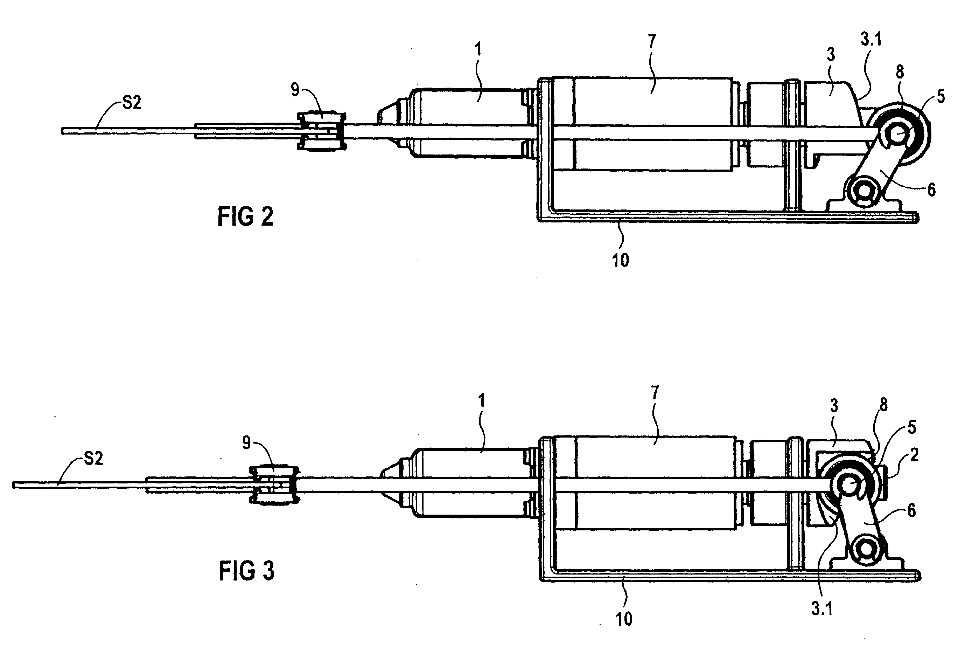

FIG 2 und 3 zeigen in Seitenansicht von FIG 1 die beiden zuvor beschriebenen Fixierungspositionen des Axialverstellelementes 5.

## Patentansprüche

1. Elektromotorische Feststellbremse, insbesondere für ein Kraftfahrzeug,
- mit einem Bremsstell-Elektromotor (1), insbesondere Kommutatormotor;
- mit einer von dem Bremsstell-Elektromotor angetriebenen, insbesondere zu dessen Motorwelle (1.1) achsparallelen bzw. koaxialen Bremsstell-Abtriebswelle (2);
- mit einem zu der Bremsstell-Abtriebswelle (2) in geringem radialen Abstand achsparallelen, von dieser in Axialrichtung verstellbaren Bremsstell-Gestänge (4);
- mit einer Antriebsverbindung von der Bremsstell-Abtriebswelle (2) zu dem Bremsstell-Gestänge (4) in Form einer axialen Kurvenscheiben- bzw. Kulissenführung (3) im Sinne einer Umsetzung der Rotation der Bremsstell-Abtriebswelle (2) in eine Translation des Bremsstell-Gestänges (4) durch ein entsprechend der axialen Kurvenscheiben- bzw. Kulissenführung geführtes querriegelartiges Axialverstellelement (5).

2. Elektromotorische Feststellbremse nach Anspruch 1,
- mit einer Ausbildung der Kurvenscheiben- bzw. Kulissenführung (3) im Sinne einer im wesentlichen konstanten Belastung des Bremsstell-Elektromotors (1) trotz unterschiedlicher Brems-Zustellkräfte für das Bremsgestell-Gestänges (4).

3. Elektromotorische Feststellbremse nach Anspruch 1 und/oder 2,
- mit einer Umsetzung der axialen Kurvenscheiben- bzw. Kulissenführung durch ein entsprechendes axiales Höhenprofil (3.1) einer mit der Bremsstell-Abtriebswelle (2) rotierenden Kurven- bzw. Kulissenscheibe (3),
- mit einer axialen Führung des Längenverstellelementes (5) entsprechend dem axialen Höhenprofil der Kurven- bzw. Kulissenscheibe (3).

4. Elektromotorische Feststellbremse nach zumindest einem der Ansprüche 1 bis 3
- mit einer zusätzlichen Hebelübersetzung zwischen dem Längsverstellelement (5) und dem Bremsstell-Gestänge (4).

5. Elektromotorische Feststellbremse nach zumindest einem der Ansprüche 1 bis 4,
- mit einem Getriebe (7), insbesondere einem Planetengetriebe, im Antriebsstrang zwischen der Rotorwelle (1.1) des Bremsstell-Elektromotors (1) und der Bremsstell-Abtriebswelle.

6. Elektromotorische Feststellbremse nach zumindest einem der Ansprüche 1 bis 5,
- mit Raststellungen im Verlauf der Kurvenscheiben bzw. Kulissenführung im Sinne einer gegenüber Rückstellungskräften selbsthemmenden Fix-Positionierung des Axialverstellelementes (5).
